# EUROPEAN PATENT SPECIFICATION

(11) **EP 1 744 517 B1**
(45) Date of publication and mention of the grant of the patent: **03.10.2012**
(21) Application number: 06014575.2
(22) Date of filing: 13.07.2006
(51) Int. Cl.: H04L 29/06, H04N 7/15

(54) **Method and system for playing multimedia files**
Verfahren und Vorrichtung zur Wiedergabe von Multimediendateien
Méthode et système pour jouer des fichiers multimédia

(30) Priority: 14.07.2005 CN 200510083944
(43) Date of publication of application: 17.01.2007
(73) Proprietor: Huawei Technologies Co., Ltd., Longgang District, Shenzhen Guangdong 518129 (CN)
(72) Inventor: Miao, Caixia, Huawei Adm. Building, Shenzhen, Guangdong Province 518129 (CN); Shen, Qingchun, Huawei Adm. Building, Shenzhen, Guangdong Province 518129 (CN); Zhang, Wenge, Huawei Adm. Building, Shenzhen, Guangdong Province 518129 (CN); Chen, Xiaodong, Huawei Adm. Building, Shenzhen, Guangdong Province 518129 (CN); Yuan, Lei, Huawei Adm. Building, Shenzhen, Guangdong Province 518129 (CN); Shang, Wanjun, Huawei Adm. Building, Shenzhen, Guangdong Province 518129 (CN)
(74) Representative: Gleiter, Hermann

(56) References cited:
- GB-A- 2 363 543
- US-A1- 2003 014 488

## Description

### Field of the Invention

The present invention generally relates to voice conference or multimedia conference services in the next generation network, and more specifically to a method for playing local multimedia files in a communication network.

### Background

With the development of communication techniques, the integration of telecommunications and Internet is continuously being applied, which takes the functional advantages of both computers and telephones. The appearance of various novel telecommunication services has brought many new functions into the telecommunication field. Currently, a service of voice conference or voice chat room that is initiated and controlled via WEB or intelligent terminal is widely applied, which enables a chairman of the conference or the chat room to perform control operation via WEB or intelligent terminal so as to implement various functions. At the conference, the chairman may select to play local audio/video files in the conference console for each participator. The files may include WAVE files of someone's speech recorded in real time, or music files in MP3 format, etc.

At present, the method for playing local audio/video files in a conference console is generally known to open and play the local audio/video files by use of a local player in the conference console, and the sound being magnified by the loud speakers in the conference console is broadcast through a phone speaker to the participators at the meeting.

In this method, primarily, the loudspeakers are required for playing the audio/video files directly, which causes limitations to the conference environment and facilities. Yet, it has large noises. Moreover, only audio files can be played, whereas video images of the video files cannot be transmitted to the participators.

US 2003 014488 A1 relates to the field of software systems, specifically in the area of Voice over IP, conferencing, instant messging and presence and availability management. In particular, the present invention provides a system and method for enabling multimedia, real-time group communications on real-time communications platforms. The present invention takes advantage of the properties available in real-time communications platforms to provide multimedia, real-time conferencing and communications services.

GB 2363543 A discloses a method of completing a voice call from a telecommunications terminal 7 in a switched telecommunications network is described in which a call is redirected from a target telecommunications terminal 3 to a call management server 9. The identification of the voice call is transmitted to a user operable terminal 1 over a data network. A request for a voice session to be set up over the data network is generated and transmitted to a voice over data server 10. Within the voice over data server a voice over data channel is reserved and the call is completed be redirecting the call to the voice over data server and opening the reserved voice over data channel to the user operable terminal. The data network may be the internet. Arrangements for setting up a voice call via the internet, the transmission of advertisements and setting a voice call to a call centre are also disclosed.

### Summary of the Invention

An aspect of the present invention provides a method for playing audio/video files stored in a conference console, which is applied to conference services in a next generation network. In the method: the conference console sends a request for playing the audio/video files to a conference application server; determining a media channel, wherein the media resource server determines whether there is an existing media channel between the media resource server and the conference console, and if so, using the existing media channel; if not, the conference application server requesting the media resource server to establish a new media channel between the media resource server and the conference console; the conference console converts the format of media streams of the audio/video files into a format supported by the media resource server, and transfers the converted media streams to the media resource server via the media channel; and the media resource server plays media stream information of the audio/video files to conference terminals.

In another aspect, a system for playing audio/video files (multimedia files) stored in a conference console in a communication network, comprising:
a conference console configured to send a request f to a conference application server for playing the stored audio/video files, convert the format of media streams of the stored audio/video files into a format supported by a media resource server, and transfer the converted media streams to the media resource server via a media channel ;
a conference application server configured to receive the request for playing audio/video files sent by the conference console, determine whether there is an existing media channel between the conference console and the media resource server, if so, using the existing media channel; otherwise, sending a request to the media resource server to establish a new media channel; and
the media resource server configured to establish a new media channel between the media resource server and the conference console in response to the request for establishing a new media channel from the conference application server, receive over the media channel the converted media streams of the audio/video files from the conference console, and broadcast the audio/video files to conference terminals upon receiving the multimedia files from the conference console.

In another aspect, a conference console comprising a component configured to: store audio/video files; convert the format of media streams of the stored audio/video files into a format supported by a media resource server; and transfer the converted media streams to the media resource server via a media channel between the media resource server and the conference console established in response to a request from conference application server.

According to the present invention, the user conference console as a licensed Next Generation Network (NGN) soft terminal is admitted to the conference; and through a media channel established between the media resource server and the conference console, the audio/video files stored in the conference console can be converted into those of a media stream format supported by the media resource server and then transferred to the media resource sever, where the media streams are broadcast to the conference terminals. As a result, the audio/video files can be played irrespective of whether the local facilities are provided with corresponding playing functions or not. Since the negotiation on media resource between the soft terminal and the media resource server is conducted under the session initiation protocol (SIP), and the audio/video files desired for playing are converted into media streams and transferred through NGN network, the method according to the present invention is able to play both the audio files and the video files. Besides, since the present invention is constituted based on the NGN network architecture, it is conveniently possible for the conference application server to charge for playing the audio/video files.

### Brief Description of the Drawings

Fig. 1 is a schematic diagram showing an architecture of a network applied in the present invention;
Fig. 2 is a flowchart showing a method according to a first embodiment of the present invention;
Fig. 3 is a flowchart showing a method according to a second embodiment of present invention.

### Detailed Description of the Invention

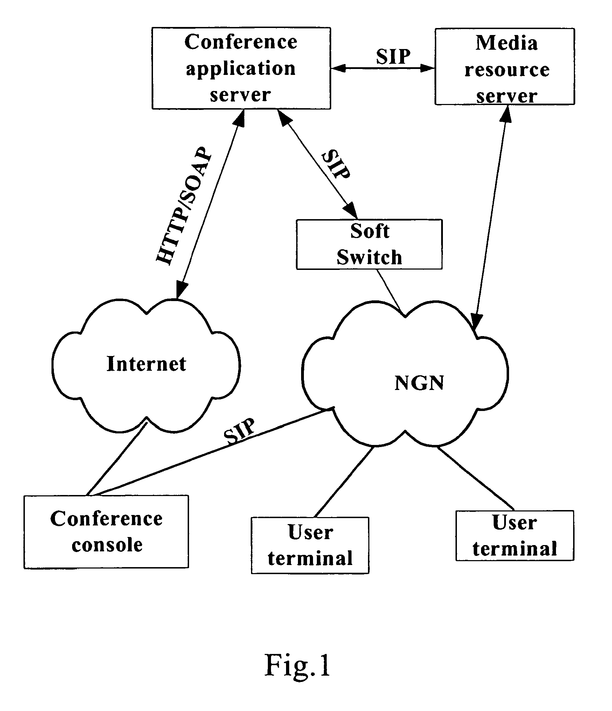

As shown in Fig. 1, the present invention provides the conference services by using a Next Generation Network (NGN) architecture, which includes network entities such as a conference console, a conference application server, a soft switch, a media resource server (MRS) and a conference terminal, etc..

In particular, the conference console provides an interface for a user to initiate and control a conference via WEB or a client. The user may utilize related functions provided by the conference services, such as inviting other user to join the conference, playing local audio/video files for participators, and terminating the conference, etc., so as to control the conference. Additionally, the conference console may communicate with the conference application server under HTTP/SOAP protocol, and may communicate with the soft switch under the standard SIP protocol.

The conference application server is a server for conference service loading and operating, which may control conference calls, and implement corresponding functions of the conference.

The soft switch performs functions such as service triggering, routing and call connection, etc.. Typically, the soft switch triggers calls to the conference application server, and the conference application server takes over the subsequent control of the calls.

The media resource server (MRS) provides media resources, such as conference hall, announcement and collecting information, etc., for the conference application server.

The conference terminal, such as a phone terminal, is used by the user to attend the conference and talk with other participators.

According to the network architecture mentioned above, it is provided in the present invention a method for playing the audio/video files stored in the conference console, including the following steps.
1) The conference console sends a request for playing the audio/video files to the conference application server.
2) The conference application server sends a request to the media resource server for establishing a media channel between the conference console and the media resource server.
3) The conference console converts the format of media streams of the audio/video files stored therein into a format supported by the media resource server, and transfers them to the media resource server via the media channel.
4) The media resource server plays the media streams to the conference terminals.

Detailed descriptions of the above method will be given as below with reference to the accompanying drawings.

Hereinafter, a method according to a first embodiment of the present invention will be described.

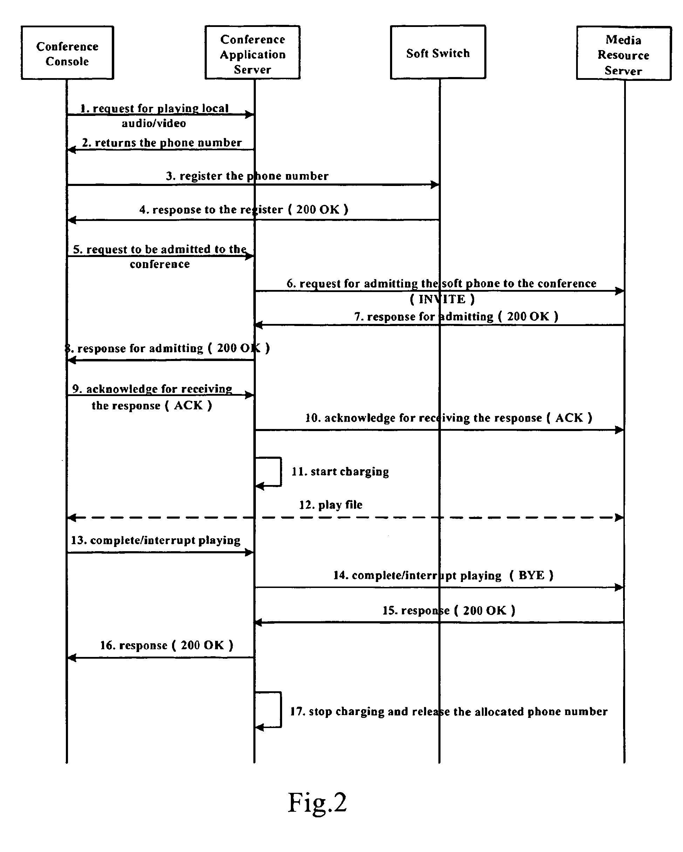

While playing the audio/video files, the conference console sends a request to the conference application server for applying a phone number and the conference application server allocates one phone number dynamically and returns that to the conference console. After that, the conference console attends the conference temporarily as a soft phone terminal, simulates a participator to speak, converts the format of media streams of the audio/video files desired to a format supported by the media server resource server, and plays the media streams. A detailed signaling flow of the present embodiment is shown in Fig.2, which includes the following steps.

At step 1, if the chairman of the conference desires to play an audio/video file stored in the conference console to participators at a conference, he/she may send a request for playing the file to the conference application server via the conference console.

At step 2, the conference application server selects an unallocated phone number which is not open to the users (i.e. a virtual phone number) and can be dynamically maintained and allocated by the conference application server, and returns the phone number to the conference console; and further, after playing the local audio/video files, the conference application server withdraws the phone number for reuse.

At step 3, the conference console binds the phone number returned by the conference application server with an IP address and a port number of the conference console and registers the bound phone number, IP address and port number in the soft switch.

At step 4, the soft switch notifies the conference console of a result for the registering by a register response (200 OK); and if registering successfully, the conference console may participate the conference as an internal soft phone terminal of the NGN network and communicate with other phone terminals or internal soft phone terminals to receive and deliver signaling and media streams.

At step 5, after registering the soft phone terminal successfully, the conference console sends a request to the conference application server for admitting the soft phone registered by itself to the conference.

At step 6, the conference application server determines whether the soft phone number is authenticated, and if so, the conference application server requests the MRS to connect the soft phone terminal (i.e. the conference console) to the conference.

At step 7, the MRS answers the request from the conference application server and notifies the conference application server of the result that the soft phone terminal (i.e. the conference console) has been admitted to the conference.

At step 8, the conference application server notifies the conference console of the result that the soft phone terminal (i.e. the conference console) has been admitted to the conference.

At step 9, upon receiving the result, the conference console sends an acknowledge message (ACK) to the conference application server to confirm that the local audio/video file is ready for playing.

At step 10, the conference application server returns the acknowledge message (ACK) to the MRS to accomplish negotiation of the media channel.

At step 11, the conference application server starts to charge for playing the local audio/video files.

At step 12, the conference console opens the local audio/video file stored in the conference console, converts the format of media streams of the audio/video file to a format supported by the MRS, and transfers the media streams in the converted format to the MRS through the media channel established between them, whereby the MRS can perform audio mixing or playing video files to the participators.

At step 13, if the conference console interrupts playing the audio/video files or the playing is completed, the conference console sends an instruction for stop to the conference application server.

At step 14, the conference application server sends a BYE message to the MRS to notify the MRS to release media resources occupied by the media channel.

At step 15, the MRS returns a 200 OK response message to the conference application server.

At step 16, the conference application server sends a stop response message to the conference console.

At step 17, the conference application server stops charging for playing the local audio/video files, and withdraws the virtual phone number allocated for the conference console, whereby the current process of playing the local audio/video files is ended.

Hereinafter, references will be made to a method according to a second embodiment of present invention.

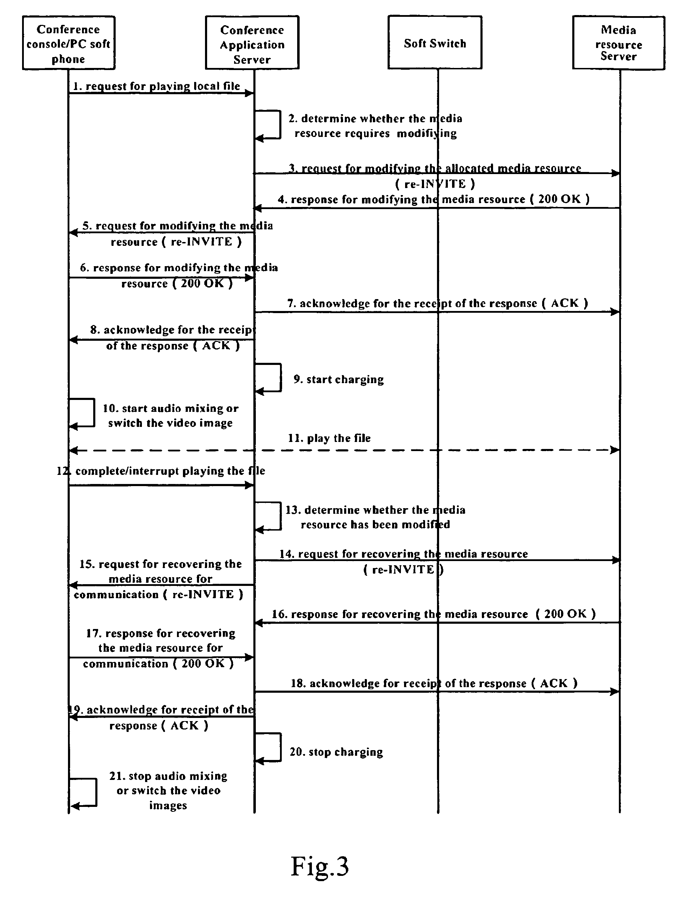

In the case that the conference console is provided with a function as a soft phone and a user has participated the conference by using the soft phone as a conference phone, it may use an existing media channel between the media resource server and the conference console to transfer the media streams while playing the local audio/video file stored in the conference console. In such a case, there is no necessity for the conference application server to allocate a phone number dynamically for registering. In this way, the existing media channel between the media resource server and the conference console is used for both playing the local files and communicating between the users. If the conference console provides a function of sound mixing, the user may communicate normally while the local files are playing. Contrarily, if the conference console provides no function of sound mixing, the user may not speak for the moment while the local files are playing. Moreover, if one requires playing a local video file, it should switch the current conference video images at the user side to images of the local video files. Fig. 3 shows a detailed signaling flow according to the present embodiment, including the following steps.

At step 1, in the case that the user is speaking by use of the soft phone terminal provided by the conference console at the conference, if the user desires to play the local audio/video files stored in the conference console, the user may select a function of playing local files by the conference console, and the conference console will send a request for playing the files to the conference application server while simultaneously carrying the media resource information required for playing the desired files.

At step 2, upon receiving the request for playing the files, the conference application server determines whether the media resource required for playing the files is identical with the current media resource occupied by the media channel used by the user for communication. If not, proceed to steps 3-8 to request the MRS and the conference console again to allocate the media resource required for playing the files; otherwise, proceed to step 9.

At step 3, the conference application server requests the MRS to modify the media resource allocated for the media channel, so as to ensure the media resource required for playing the local audio/video files.

At step 4, the MRS returns a response for modifying the media resource to the conference application server.

At step 5, the conference application server requests the soft phone terminal (i.e. the conference console) to modify its media resource into the media resource for playing the local files.

At step 6, the soft phone terminal returns a response for modifying the media resource to the conference application server.

At step 7, upon receiving the response from the MRS, the conference application server sends an acknowledge message to the MRS.

At step 8, upon receiving the response from the soft phone terminal, the conference application server sends an acknowledge message to the soft phone terminal.

At step 9, after the media resource of the soft phone terminal and the MRS are ready, the conference application server starts charging for playing the local audio/video files stored in the conference console if required.

At step 10, in order to ensure that the users communicate normally while the local files are playing, the soft phone terminal starts the function of audio mixing (if provided) to mix the audio streams of the local audio files and the speeches of the user and send the mixed audio streams to the MRS for broadcasting to the participators. In the case that a video file is desired for playing, the conference console may switch the video images at the user side to images for playing the local files, and send the video images for playing the local files to the MRS for broadcasting to all the participators.

At step 11, the conference console plays the local audio/video files through the soft phone terminal.

At step 12, if the conference console interrupts playing the audio/video files or the playing is completed, the conference console sends an instruction for stop to the conference application server.

At step 13, in order for the conference application server to recover the media resource used by the user in normal communication, the conference application server determines whether the media resource has been modified while playing the local audio/video files, and if so, proceed to steps 14-19 to recover the media resource for normal communication of the user; if not, proceed to step 20.

At step 14, the conference application server requests the MRS to recover the media resource allocated for the soft phone terminal.

At step 15, the conference application server requests the soft phone terminal to recover the media resource for normal communication.

At step 16, the MRS returns an answer message for recovering the media resource for normal communication to the conference application server.

At step 17, the soft phone terminal returns a response message for recovering the media resource for normal communication to the conference application server.

At step 18, upon receiving the answer message from the MRS, the conference application server sends an acknowledge message to the MRS.

At step 19, upon receiving the response message from the soft phone terminal, the conference application server sends an acknowledge message to the soft phone terminal.

At step 20, the conference application server stops charging for playing the local audio/video files.

At step 21, the conference console stops the function of audio mixing and switches the video images for playing local files to the conference video images for the user.

In the second embodiment, it is possible to use the existing media channel between the media resource server and the soft phone terminal (i.e. conference console) to transfer the media streams while playing the local audio/video files, since the conference console is provided with a function of soft phone and it has participated the conference as a soft phone terminal. Certainly, when the media resource occupied by the existing media channel cannot satisfy for playing the local audio/video files, it requires modifying the media resource allocated for the same media channel to meet the requirement for playing the local audio/video files.

It will be apparent to those skilled in the art that various modifications and variations can be made in the present invention without departing the spirit and the scope of the invention. Thus, it is intended that the present invention covers the modifications and variations of this invention provided they come within the scope of the appended claims.

## Claims

1. A method for playing audio/video files stored in a conference console, which is applied to conference services in a next generation net work, comprising processes of:
sending, by the conference console, a request for playing the audio/video files to a conference application server;
determining (2), by the conference application server, whether there is an existing media channel between a media resource server and the conference console, and if so, using the existing media channel; if not, the conference application server requesting the media resource server to establish a new media channel between the media resource server and the conference console;
converting, by the conference console, the format of media streams of the audio/video files into a format supported by the media resource server, and transferring, by the conference console, the converted media streams to the media resource server via the media channel; and
playing (12), by the media resource server, the media stream information of the audio/video files to conference terminals.

2. The method according to claim 1, wherein the process of establishing a new media channel between the media resource server and the conference console further comprises:
allocating a virtual phone number for the conference console by the conference application server upon receiving the request for playing the audio/video files from the conference console;
binding the virtual phone number with an IP address and a port number of the conference console and registering the bound virtual phone number, IP address and port number to a soft switch as a soft phone terminal, by the conference console;
sending a request to the conference application server for admitting the soft phone terminal to a conference by the conference console; and
the conference application server requesting the media resource server to admit the conference console as the soft phone terminal to the conference after authentication and establish the media channel between the media resource server and the conference console.

3. The method according to the claim 2, further comprising processes of:
sending (13), by the conference console, an instruction for stopping to the conference application server after the conference console interrupts playing the audio/video files or the playing is completed; and
notifying (14), by the conference application server, in response to the instruction for stopping, the media resource server to release the media channel and withdrawing the current virtual phone number allocated for the conference console.

4. The method according to the claim 1, further comprising
if there is existing media channel between the conference resource server and the conference console, carrying, by the conference console, media resources required for playing the audio/video files in the request for playing the audio/video files to the conference application server;
determining, by the conference application server, whether the existing media channel suffices the required media resources, and if so, using, by the conference application server, the existing media channel; if not, requesting, by the conference application server, the media resource server and the conference console to modify the media resources allocated for the existing media channel to the media resources required for playing the audio/video files.

5. The method according to claim 4, further comprising processes of:
the conference console sending a terminating playing instruction to notify the conference application server after completing playing the files or a user stops playing the files; and
recovering the media resources to an original status before modifying if the media resource server and the conference console modify the media resources allocated for the media channel.

6. The method according to claim 4, wherein the existing media channel between the media resource server and the conference console is a media channel established between the soft phone terminal and the media resource server.

7. The method according to claim 6, wherein if the conference console is provided with a function of audio mixing, the conference console mixes the media streams of the audio/video files and user speeches and transfers the mixed media steams to the media resource server via the media channel.

8. The method according to claim 1, further comprising the conference application server charging for playing the audio/video files.

9. A system for playing audio/video files stored in a conference console in a communication network, comprising:
a conference console configured to:
send a request to a conference application server for playing the stored audio/video files,
convert a format of media streams of the stored audio/video files into a format supported by a media resource server, and
transfer the converted media streams to the media resource server via a media channel and ;
a conference application server configured to:
receive the request for playing audio/video files sent by the conference console;
determine whether there is an existing media channel between the conference console and the media resource server, if so, using the existing media channel; otherwise, sending a request to the media resource server to establish a new media channel; and
a media resource server configured to:
establish a new media channel between the media resource server and the conference console in response to the request for establishing a new media channel from the conference application server,
receive over the media channel the converted media streams of the audio/video files from the conference console, and
broadcast the audio/video files to conference terminals.

10. The system according to claim 9, wherein
the conference application service is further configured to allocate a virtual phone number for the conference console upon receiving the playing request from the conference console;
the conference console is further configured to bind the virtual phone number with an IP address and a port number of the conference console and register the bound virtual phone number, IP address and port number to a soft switch as a soft phone terminal, and further send a request to the conference application server for admitting the soft phone terminal to a conference; and
the conference application server is further configured to request the media resource server to admit the conference console as the soft phone terminal to the conference after authentication and establish the media channel between the media resource server and conference console.

11. The system according to claim 9, wherein the conference console is further configured to mix audio by mixing the media streams of the audio/video files and user speeches and transfer the mixed media streams to the media resource server via the media channel.

12. A conference console comprising a component configured to:
store audio/video files;
send a request for playing the audio/video Files to a conference application server; convert the format of media streams of the stored audio/video files into a format supported by a media resource server; and
transfer the converted media streams to the media resource server via a media channel between the media resource server and the conference console established by a request from the conference application server in response to the request by the conference console.

## Patentansprüche

1. Verfahren zum Abspielen von Audio/Video-Dateien, die in einer Konferenzkonsole gespeichert sind, wobei das Verfahren auf Konferenzdienste in einem Netz der nächsten Generation angewendet wird, wobei das Verfahren die folgenden Prozesse umfasst:
Senden einer Anforderung zum Abspielen der Audio/Video-Dateien an einen Konferenzanwendungsserver durch die Konferenzkonsole;
Bestimmen (2), ob es zwischen einem Medienbetriebsmittelserver und der Konferenzkonsole einen vorhandenen Medienkanal gibt, durch den Konferenzanwendungsserver, und wenn dies der Fall ist, Verwenden des vorhandenen Medienkanals; wobei, wenn dies nicht der Fall ist, der Konferenzanwendungsserver anfordert, dass der Medienbetriebsmittelserver einen neuen Medienkanal zwischen dem Medienbetriebsmittelserver und der Konferenzkonsole aufbaut;
Umsetzen des Formats der Mediendatenströme der Audio/Video-Dateien in ein durch den Medienbetriebsmittelserver unterstütztes Format durch die Konferenzkonsole,
und Übertragen der umgesetzten Mediendatenströme an den Medienbetriebsmittelserver über den Medienkanal durch die Konferenzkonsole; und
Abspielen (12) der Mediendatenstrominformationen der Audio/Video-Dateien für Konferenzendgeräte durch den Medienbetriebsmittelserver.

2. Verfahren nach Anspruch 1, wobei der Prozess des Aufbauens eines neuen Medienkanals zwischen dem Medienbetriebsmittelserver und der Konferenzkonsole ferner Folgendes umfasst:
Zuweisen einer virtuellen Telefonnummer für die Konferenzkonsole durch den Konferenzanwendungsserver beim Empfang der Anforderung zum Abspielen der Audio/Video-Dateien von der Konferenzkonsole;
Binden der virtuellen Telefonnummer mit einer IP-Adresse und mit einer Portnummer der Konferenzkonsole und Registrieren der gebundenen virtuellen Telefonnummer, IP-Adresse und Portnummer bei einer Soft-Vermittlung als ein Soft-Telefon-Endgerät durch die Konferenzkonsole;
Senden einer Anforderung zum Zulassen des Soft-Telefon-Endgeräts zu einer Konferenz durch die Konferenzkonsole an den Konferenzanwendungsserver; und
wobei der Konferenzanwendungsserver anfordert, dass der Medienbetriebsmittelserver die Konferenzkonsole nach der Authentisierung und nach dem Aufbau des Medienkanals zwischen dem Medienbetriebsmittelserver und der Konferenzkonsole als das Soft-Telefon-Endgerät für die Konferenz zulässt.

3. Verfahren nach Anspruch 2, das ferner die folgenden Prozesse umfasst:
Senden (13) einer Anweisung zum Anhalten an den Konferenzanwendungsserver, nachdem die Konferenzkonsole das Abspielen der Audio/Video-Datei unterbrochen hat oder das Abspielen abgeschlossen ist, durch die Konferenzkonsole; und
Benachrichtigen (14) des Medienbetriebsmittelservers zum Freigeben des Medienkanals und Zurückziehen der gegenwärtigen für die Konferenzkonsole zugeordneten virtuellen Telefonnummer durch den Konferenzanwendungsserver als Reaktion auf die Anweisung zum Anhalten.

4. Verfahren nach Anspruch 1, das ferner Folgendes umfasst:
falls es zwischen dem Konferenzbetriebsmittelserver und der Konferenzkonsole einen vorhandenen Medienkanal gibt, Übermitteln von Medienbetriebsmitteln, die zum Abspielen der Audio/Video-Dateien in der Anforderung zum Abspielen der Audio/Video-Dateien für den Konferenzanwendungsserver erforderlich sind, durch die Konferenzkonsole;
Bestimmen, ob der vorhandene Medienkanal für die angeforderten Medienbetriebsmittel ausreicht, durch den Konferenzanwendungsserver, und wenn dies der Fall ist, Verwenden des vorhandenen Medienkanals durch den Konferenzanwendungsserver; wenn dies nicht der Fall ist, Anfordern, dass der Medienbetriebsmittelserver und die Konferenzkonsole die für den vorhandenen Medienkanal zugewiesenen Medienbetriebsmittel zu den zum Abspielen der Audio/Video-Dateien erforderlichen Medienbetriebsmitteln ändern, durch den Konferenzanwendungsserver.

5. Verfahren nach Anspruch 4, das ferner die folgenden Prozesse umfasst:
Senden einer Abspielabschlussanweisung durch die Konferenzkonsole, um den Konferenzanwendungsserver zu benachrichtigen, nachdem das Abspielen der Dateien abgeschlossen worden ist oder ein Nutzer das Abspielen der Dateien angehalten hat; und
Wiederherstellen der Medienbetriebsmittel auf einen Ausgangszustand vor dem Ändern, falls der Medienbetriebsmittelserver und die Konferenzkonsole die für den Medienkanal zugewiesenen Medienbetriebsmittel ändern.

6. Verfahren nach Anspruch 4, wobei der vorhandene Medienkanal zwischen dem Medienbetriebsmittelserver und der Konferenzkonsole ein zwischen dem Soft-Telefon-Endgerät und dem Medienbetriebsmittelserver aufgebauter Medienkanal ist.

7. Verfahren nach Anspruch 6, wobei die Konferenzkonsole, falls die Konferenzkonsole mit einer Funktion zur Audiomischung versehen ist, die Mediendatenströme der Audio/Video-Dateien und Nutzersprachen mischt und die gemischten Mediendatenströme über den Medienkanal an den Medienbetriebsmittelserver überträgt.

8. Verfahren nach Anspruch 1, das ferner umfasst, dass der Konferenzanwendungsserver für das Abspielen der Audio/Video-Dateien Gebühren erhebt.

9. System zum Abspielen von AudioNideo-Dateien, die in einer Konferenzkonsole in einem Kommunikationsnetz gespeichert sind, wobei das System Folgendes umfasst:
eine Konferenzkonsole, die zu Folgendem konfiguriert ist:
Senden einer Anforderung zum Abspielen der gespeicherten Audio/Video-Dateien an einen Konferenzanwendungsserver,
Umsetzen eines Formats von Mediendatenströmen der gespeicherten Audio/Video-Dateien in ein durch einen Medienbetriebsmittelserver unterstütztes Format, und
Übertragen der umgesetzten Mediendatenströme an den Medienbetriebsmittelserver über einen Medienkanal; und
einen Konferenzanwendungsserver, der zu Folgendem konfiguriert ist:
Empfangen der durch die Konferenzkonsole gesendeten Anforderung zum Abspielen von Audio/Video-Dateien;
Bestimmen, ob es zwischen der Konferenzkonsole und dem Medienbetriebsmittelserver einen vorhandenen Medienkanal gibt, wenn dies der Fall ist, Verwenden des vorhandenen Medienkanals;
andernfalls Senden einer Anforderung zum Aufbauen eines neuen Medienkanals an den Medienbetriebsmittelserver; und
einen Medienbetriebsmittelserver, der zu Folgendem konfiguriert ist:
Aufbauen eines neuen Medienkanals zwischen dem Medienbetriebsmittelserver und der Konferenzkonsole als Reaktion auf die Anforderung zum Aufbauen eines neuen Medienkanals von dem Konferenzanwendungsserver,
Empfangen der umgesetzten Mediendatenströme der Audio/Video-Dateien von der Konferenzkonsole über den Medienkanal, und
Rundsenden der Audio/Video-Dateien an Konferenzendgeräte.

10. System nach Anspruch 9, wobei
der Konferenzanwendungsserver ferner zum Zuweisen einer virtuellen Telefonnummer für die Konferenzkonsole beim Empfang der Abspielanforderung von der Konferenzkonsole konfiguriert ist;
die Konferenzkonsole ferner zum Binden der virtuellen Telefonnummer mit einer IP-Adresse und mit einer Portnummer der Konferenzkonsole und zum Registrieren der gebundenen virtuellen Telefonnummer, IP-Adresse und Portnummer bei einer Soft-Vermittlung als ein Soft-Telefon-Endgerät und ferner zum Senden einer Anforderung zum Zulassen des Soft-Telefon-Endgeräts zu einer Konferenz an den Konferenzanwendungsserver konfiguriert ist; und
der Konferenzanwendungsserver ferner zum Anfordern, dass der Medienbetriebsmittelserver die Konferenzkonsole nach Authentisierung als das Soft-Telefon-Endgerät für die Konferenz zulässt und zum Aufbauen des Medienkanals zwischen dem Medienbetriebsmittelserver und der Konferenzkonsole konfiguriert ist.

11. System nach Anspruch 9, wobei die Konferenzkonsole ferner zum Mischen von Audio durch Mischen der Mediendatenströme der Audio/Video-Dateien und Nutzersprachen und Übertragen der gemischten Mediendatenströme an den Medienbetriebsmittelserver über den Medienkanal konfiguriert ist.

12. Konferenzkonsole, die eine Komponente umfasst, die zu Folgendem konfiguriert ist:
Speichern von Audio/Video-Dateien;
Senden einer Anforderung zum Abspielen der Audio/Video-Dateien an einen Konferenzanwendungsserver;
Umsetzen des Formats von Mediendatenströmen der gespeicherten Audio/Video-Dateien in ein durch einen Medienbetriebsmittelserver unterstütztes Format; und
Übertragen der umgesetzten Mediendatenströme an den Medienbetriebsmittelserver über einen Medienkanal zwischen dem Medienbetriebsmittelserver und der Konferenzkonsole, der als Reaktion auf die Anforderung durch die Konferenzkonsole durch eine Anforderung von dem Konferenzanwendungsserver aufgebaut worden ist.

## Revendications

1. Procédé de lecture de fichiers audio/vidéo stockés dans une console de conférence, appliqué à des services de conférence dans un réseau de nouvelle génération, comprenant les processus suivants :
l'envoi, par la console de conférence, d'une requête de lecture des fichiers audio/vidéo vers un serveur d'application de conférence ;
la détermination (2), par le serveur d'application de conférence, du fait qu'il y a ou
non un canal de média existant entre un serveur de ressources média et la console de conférence et, si tel est le cas, l'utilisation du canal de média existant, sinon, la requête par le serveur d'application de conférence de l'établissement, par le serveur de ressources média, d'un nouveau canal de média entre le serveur de ressources média et la console de conférence ;
la conversion, par la console de conférence, du format des flux de média des fichiers audio/vidéo en un format supporté par le serveur de ressources média, et le transfert,
par la console de conférence, des flux de média convertis vers le serveur de ressources média via le canal de média ; et
la lecture (12), par le serveur de ressources média, des informations de flux de média des fichiers audio/vidéo vers des terminaux de conférence.

2. Procédé selon la revendication 1, dans lequel le processus d'établissement d'un nouveau canal de média entre le serveur de ressources média et la console de conférence comprend également :
l'attribution d'un numéro de téléphone virtuel pour la console de conférence, par le serveur d'application de conférence, lors de la réception de la requête de lecture des fichiers audio/vidéo depuis la console de conférence ;
la liaison du numéro de téléphone virtuel à une adresse IP et à un numéro de port de la console de conférence, et l'enregistrement du numéro de téléphone virtuel, de l'adresse IP et du numéro de port liés auprès d'un commutateur logiciel en qualité de terminal téléphonique logiciel par la console de conférence ;
l'envoi d'une requête au serveur d'application de conférence afin d'admettre le terminal téléphonique logiciel à une conférence par la console de conférence ; et
la requête par le serveur d'application de conférence de l'admission par le serveur de ressources média de la console de conférence en qualité de terminal téléphonique logiciel à une conférence après authentification, et de l'établissement du canal de média entre le serveur de ressources média et la console de conférence.

3. Procédé selon la revendication 2, comprenant en outre les processus suivants :
l'envoi (13), par la console de conférence, d'une instruction d'interruption au serveur d'application de conférence après que la console de conférence a interrompu la lecture des fichiers audio/vidéo ou lorsque la lecture est terminée ; et
l'ordre (14) du serveur d'application de conférence, en réponse à l'instruction d'interruption, au serveur de ressources média de libérer le canal de média et de retirer le numéro de téléphone virtuel courant attribué pour la console de conférence.

4. Procédé selon la revendication 1, comprenant en outre :
s'il y a un canal de média existant entre le serveur de ressources de conférence et la console de conférence, le transfert par la console de conférence des ressources média nécessaires pour lire les fichiers audio/vidéo dans la requête de lecture de fichiers audio/vidéo vers le serveur d'application de conférence ;
la détermination, par le serveur d'application de conférence, du fait que le canal de média existant suffit ou non pour les ressources média requises et, si tel est le cas,
l'utilisation par le serveur d'application de conférence du canal de média existant, sinon, la requête par le serveur d'application de conférence de la modification, par le serveur de ressources média et la console de conférence, des ressources média attribuées pour le canal de média existant aux ressources média requises pour lire les fichiers audio/vidéo.

5. Procédé selon la revendication 4, comprenant en outre les processus suivants :
l'envoi, par la console de conférence, d'une instruction de fin de lecture afin d'avertir le serveur d'application de conférence après la fin de la lecture des fichiers ou
lorsque l'utilisateur interrompt la lecture des fichiers ; et
le retour des ressources média à un statut original avant modification si le serveur de ressources média et la console de conférence modifient les ressources média attribuées pour le canal de média.

6. Procédé selon la revendication 4, dans lequel le canal de média existant entre le serveur de ressources média et la console de conférence est un canal de média établi entre le terminal téléphonique logiciel et le serveur de ressources média.

7. Procédé selon la revendication 6, dans lequel, si la console de conférence comprend une fonction de mixage audio, la console de conférence mixe les flux de média des fichiers audio/vidéo et les paroles de l'utilisateur, et transfère les flux de média mixés vers le serveur de ressources média via le canal de média.

8. Procédé selon la revendication 1, dans lequel le serveur d'application de conférence facture la lecture des fichiers audio/vidéo.

9. Système de lecture de fichiers audio/vidéo stockés dans une console de conférence dans un réseau de communication, comprenant :
une console de conférence conçue pour :
envoyer une requête à un serveur d'application de conférence afin de lire les fichiers audio/vidéo stockés ;
convertir un format de flux de média des fichiers audio/vidéo stockés en un format supporté par le serveur de ressources média ; et
transférer les flux de média convertis vers le serveur de ressources média via un canal de média ; et
un serveur d'application de conférence conçu pour :
recevoir la requête de lecture des fichiers audio/vidéo envoyée par la console de conférence ;
déterminer s'il y a un canal de média existant entre la console de conférence et, si tel est le cas, utiliser le canal de média existant ;
sinon, envoyer une requête au serveur de ressources média afin d'établir un nouveau canal de média ; et
un serveur de ressources média conçu pour :
établir un nouveau canal de média entre le serveur de ressources média et la console de conférence en réponse à la requête d'établissement d'un nouveau canal de média depuis le serveur d'application de conférence ;
recevoir sur le canal de média les flux de média convertis des fichiers audio/vidéo depuis la console de conférence ; et
diffuser les fichiers audio/vidéo vers les terminaux de conférence.

10. Système selon la revendication 9, dans lequel :
le serveur d'application de conférence est en outre conçu pour attribuer un numéro de téléphone virtuel pour la console de conférence lors de la réception de la requête de lecture depuis la console de conférence ;
la console de conférence est en outre conçue pour lier le numéro de téléphone virtuel à une adresse IP et à un numéro de port de la console de conférence, et enregistrer le numéro de téléphone virtuel, l'adresse IP et le numéro de port liés auprès d'un commutateur logiciel en qualité de terminal téléphonique logiciel, et envoyer en outre une requête au serveur d'application de conférence afin d'admettre le terminal téléphonique logiciel à une conférence ; et
le serveur d'application de conférence est en outre conçu pour demander au serveur de ressources média d'admettre la console de conférence en qualité de terminal téléphonique logiciel à la conférence après authentification, et établir le canal de média entre le serveur de ressources média et la console de conférence.

11. Système selon la revendication 9, dans lequel la console de conférence est en outre conçue pour effectuer un mixage audio en mixant les flux de média des fichiers audio/vidéo et les paroles de l'utilisateur, et transférer les flux de média mixés vers le serveur de ressources média via le canal de média.

12. Console de conférence comprenant un composant conçu pour :
stocker des fichiers audio/vidéo ;
envoyer une requête de lecture de fichiers audio/vidéo à un serveur d'application de conférence ;
convertir le format de flux de média des fichiers audio/vidéo stockés en un format supporté par le serveur de ressources média ; et
transférer les flux de média convertis vers le serveur de ressources média via un canal de média entre le serveur de ressources média et la console de conférence établi par une requête provenant du serveur d'application de conférence en réponse à la requête de la console de conférence.
